# EUROPEAN PATENT SPECIFICATION

(11) **EP 0 976 617 B1**
(45) Date of publication and mention of the grant of the patent: **25.02.2004**
(21) Application number: 99111189.9
(22) Date of filing: 09.06.1999
(51) Int. Cl.: B60R 13/10, B60Q 1/56

(54) **Support body for motor-vehicle numberplate lightning lamps**
Stützkörper für Beleuchtungslampen von Kraftfahrzeugkennzeichen-Schildern
Corps de soutien pour lampes d'éclairage de plaque minéralogiques des automobiles

(30) Priority: 27.07.1998 IT PN980040
(43) Date of publication of application: 02.02.2000
(73) Proprietor: Plastal S.p.A., 33170 Pordenone (IT)
(72) Inventor: Garbet, Giovanni, 31015 Conegliano, Treviso (IT)
(74) Representative: Giugni, Valter

(56) References cited:
- EP-A- 0 079 728
- DE-A- 19 624 789
- US-A- 4 521 838
- US-A- 5 027 262
- US-A- 5 521 799

## Description

The present invention refers to a support body assembly for lamps used as lighting means for the numberplate of motor-vehicles, in particular motor-cars.

Numberplates situated on the rear of motor-cars are generally known to be able to be illuminated by means of one or more lamps that are preferably mounted on at least a support body attached to the bodywork of the vehicle.

In particular, the practice is known in the art to use an elongated support body that is fixed to the rear boot of the vehicle and is capable of supporting, further to the numberplate lighting lamps, also a manually actuatable device, preferably of the electromechanical type, for opening the same boot. More precisely, a manually operated lever is provided which is adapted to actuate a switch that in turn energizes an electric motor, or similar means, in order to release the boot lock.

U.S. Patent No. 5 521 799 discloses an illuminated display assembly comprising a housing, with dimension about the size of vehicle license place, which supports a light-transmitting plate spaced from the vehicle, and includes resilient metal angle brackets for electrical and mechanical engagement with a plurality of lighting devices carried within the housing.

U.S. Patent No. 5 027 262 discloses a flexible light rail having two generally parallel conducting strips enclosed in by thermoplastic layers. A series of tabs extent off the conducting strips, and are appropriately paired to receive tubular lamps.
European Patent No. 0 079 728 disclosed a mirror assembly comprising a shallow dish-like housing containing elongate conductors together defining an electrically-conductive seats for electric. The conductors extend within the interior of the housing to terminal connectors for the connection to an electrical supply externally of the housing. A frame detachably secured around the periphery of the housing defines a first aperture closed by a mirror and a second aperture containing a lens trough which light from the lamps , when energized, will be so directed as to illuminate a region in front of the mirror.
DE Patent No. 19 624 789 discloses a roof-mountable sign for motor vehicle especially taxi includes a light hood fastened to the motor vehicle comprising a lamp carrier for mechanically supporting electric light bulbs, and electric contact rails formed of flat contact stripes secured to the lamp carrier for electrically connecting the bulb lamps.
U.S. Patent No. 4 521 838 discloses a fixture for a plurality of tubular electric lamps comprising flat metal conductors carried on flanges of an elongated insulating angle bar-frame. The conductors have integrally lamp carrying tabs spaced along the entire length of the conductors, which protrude through slots in the frame.

In any case, the electrical connections of the lamps, as well as the possibly provided boot opening device, are made in the form of wire harnesses that are housed in the support body and connected to the power supply source of the vehicle through a single loosable common connector fixed to the same support body.

The harnessing of the electric wires in the support body undesirably complicates the fabrication thereof on an industrial scale and may also involve connection errors, ie. misconnections, considering that the wires themselves have to be eventually soldered to the terminals of coprresponding lamp holders and the common connector.

Furthermore, should the boot opening device have to be replaced for any reason whatsoever, the need arises for the same wires to be cut and then, upon said device having been replaced, re-connected by means of appropriate connectors. Such an operation is largely known to prove undesirably complicated and expensive.

It therefore is a purpose of the present invention to provide a support body for numberplate lighting lamps of motor-vehicles, which has a structure that is not only very simple, but also capable of being assembled and installed without any risk of errors.

In particular, a purpose of the present invention is to provide a support body of the above cited kind, which does not require any soldering of the electric connectors.

According to the present invention, these and further aims are reached in a support body for motor-vehicle numberplate lighting lamps which embodies the features recited in the appended claims.

Characteristics and advantages of the present invention will anyway be more readily understood from the description that is given below by way of non-limiting example with reference to the accompanying drawings, in which
- Figure 1 is a schematical bottom view of a preferred embodiment of the support body according to the present invention;

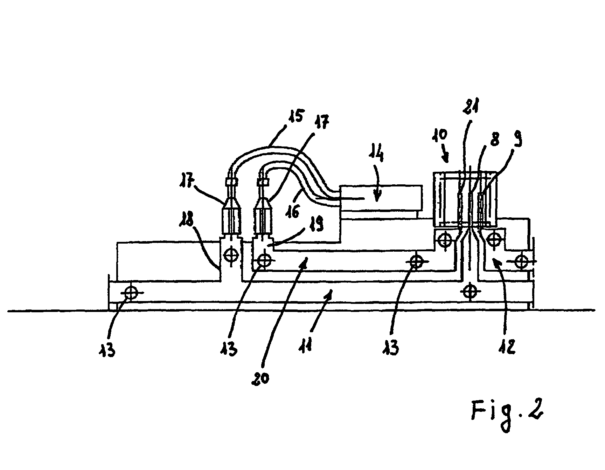

- Figure 2 is a schematical, enlarged front view of a first detail of the support body illustrated in Figure 1; and

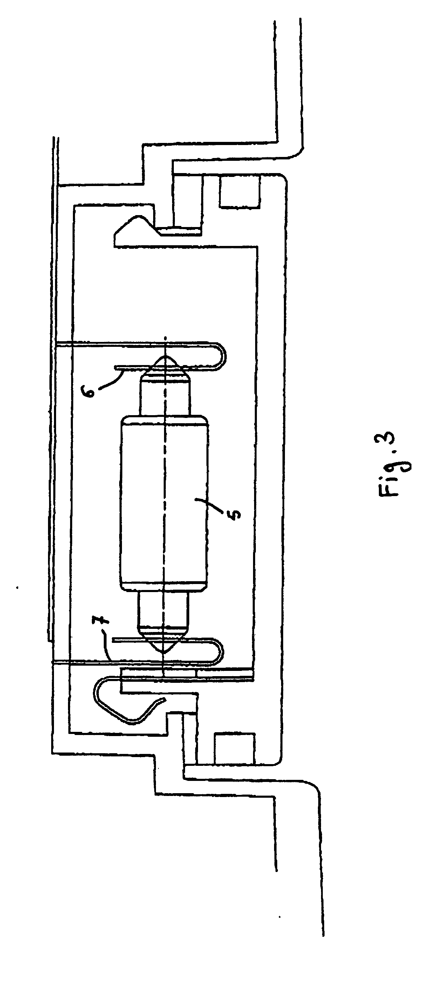

- Figure 3 is a schematical view on an enlarged scale of another detail of the support body illustrated in Figure 1.

With reference to the Figures, the support body 4 may for instance have an elongated shape and is adapted to be fixed to the bodywork of a motor-vehicle, in a per sè known and not illustrated manner, preferably in correspondence of the rear boot of the same vehicle, in a position that is appropriately adjacent to the numberplate.

The body 4 supports at least a lamp 5, preferably of the bulb type, adapted to light up the numberplate (not shown) of the vehicle and mounted in a removable manner by means of a pair of terminals 6, 7 that are adapted to also provide the electric contact thereof. Two lamps 5 are illustrated in Figure I to be associated to respective pairs of contacts 6, 7.

Respective electric conductors, which are capable of being in a per sè known manner connected to the power supply source of the vehicle via respective contacts 8, 9 of at least a loosable connector 10, extend from said terminals 6, 7 in correspondence of the body 4.

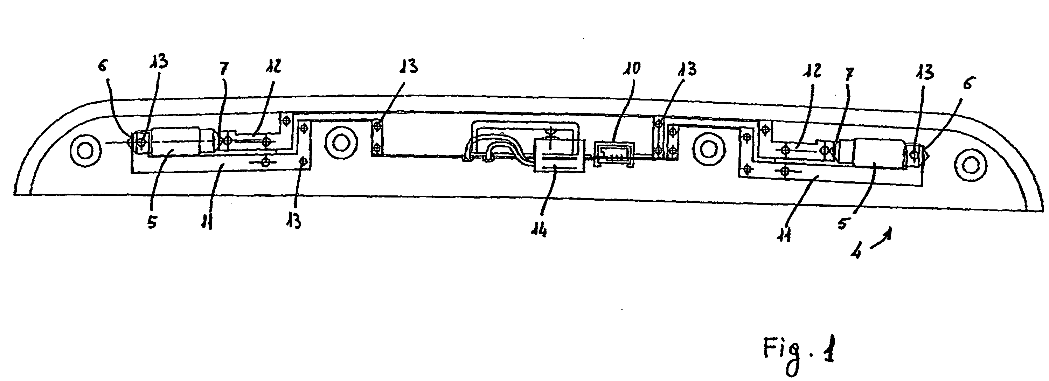

According to a feature of the present invention, said electric conductors comprise a pair of appropriately shaped metal tracks 11, 12 attached to the support body 4. In a preferred manner, said metal tracks 11, 12 are made in the form of respective thin stainless-steel strips, or the like, that are appropriately bent and shaped in accordance with the conformation of the body 4, as shown in Figure 1.

The vehicle is also provided with a manually actuatable electro-mechanical device for opening the boot of the vehicle. The body 4 carries also, again in a per sè known and non illustrated manner, a manually operated lever adapted to actuate a switch 14 which in turn is adapted to energize an electric motor, or the like, in order to unlatch or release the lock of the boot.

The electric switch 14 is fixed to the body 4 and is provided with electric terminals 15, 16 that are connected by means of loosable coupling means 17 to respective tab-shaped portions 18, 19 of the metal track 11 and at least a further metal track 20, respectively. In a preferred manner, also such a further metal track 20 is made of thin stainless-steel strip, or similar material, and is adapted to be appropriately connected to the power supply source of the vehicle through a further contact 21 of the loosable connector 10.

The terminals 6, 7 are preferably constituted by respective elastic portions (shaped so as to form corresponding seats adapted to retain the lamp 5) of the thin metal strips 11, 12. In contrast with traditional solutions, therefore, no electric welding or soldering is needed here to connect the metal strips to special support means to be provided for the lamp 5, whose mechanical assembly and the related electric connection are ensured directly by said portions 6, 7 provided integrally with the metal strips 11, 12.

The metal strips 11, 12 , 20 are preferably provided with a plurality of perforations 13, or the like, through which they can therefore be advantageously attached to corresponding fastening and locating pegs provided integrally on the body 4 which is preferably made of plastic material. For instance, said pegs can be inserted in the perforations 13 and be then hot-deformed by upsetting, or the like, in order to fasten the metal tracks 11, 12 in place.

As an alternative thereto, the pegs can be replaced with corresponding elastic teeth adapted to snap-fit into the perforations 13 so as to fasten the tracks 11, 12.

In any case, for the perforations 13, and therefore for all said tracks 11, 12, 20 said pegs or teeth constitute respective assembly locators that enable the same tracks to be correctly positioned and connected.

The contacts 8, 9 and 21 of the loosable connector 10 are preferably constituted by respective portions of the metal tracks 11, 12, 20, so that no electric welding or soldering is needed for the connection of the same metal tracks to the power supply source of the vehicle either. The particularly simple manner in which the whole support body according to the present invention is capable of being assembled can therefore be readily appreciated along with the fact that a possibly required replacement of the switch 14 can furthermore be carried out by simply disconnecting its terminals by means of the afore cited loosable coupling means 17.

In any case, fully apparent is the assembly and construction simplicity of all electric connections of the support body 4, with the practical advantage of a corresponding time saving and cost cutting effect when manufacturing such a body on an industrial scale.

It will be also appreciated that a number of modifications can be introduced and made in the above described support body without departing from the scope of the appended claims.

## Claims

1. Support body assembly (4) for at least a lamp (5) used to illuminate the numberplate of a motor-vehicle, comprising electric-contact and support terminals (6, 7) for said lamp (5) that are capable of being connected to the power supply source of the vehicle by means of respective conductors, formed of a pair of shaped metal tracks (11, 12) attached to the support body (4), at least a manually operated electric switch (14), fixed on to the same body (4) and adapted to energize an electric motor, or the like, in order to unlatch or release the lock of the boot, being provided with electric terminals (15, 16) capable of being connected to the power supply source of the vehicle, **characterized in that** the terminals (15, 16) of the electric switch (14) are connected by means of loosable coupling means (17) to respective tab-shaped portions (18, 19) of one of said pair of metal tracks (11) and at least a further metal track (20) attached to the support body (4).

2. Support body assembly (4) according to claim 1, in which said manually operated electric switch (14) is capable of being connected to the power supply source of the vehicle through at least a loosable connector (10) provided with respective contacts, (8, 21) **characterized in that** said contacts (8, 21) of the loosable connector (10) are constituted by respective portions of one of said pair of metal tracks (11, 20).

## Patentansprüche

1. Halterungsanordnung (4) zum Fassen und Tragen von mindestens einer zum Beleuchten des Kennzeichenschildes eines Fahrzeugs verwendeten Lampe (5) mit Stromanschlusskontakt- und Fassungsstücken (6, 7) für solche Lampe (5), die mit Hilfe von jeweiligen, aus einem Paar von an der Halterungsanordnung (4) befestigten Formmetallbahnen (11, 12) bestehenden Leitungen an die Stromversorgungsquelle des Fahrzeugs anschließbar sind, wobei mindestens ein an derselben Halterungsanordnung (4) befestigter und zum Einschalten eines Elektromotors oder einer ähnlichen Vorrichtung zur Auslösung des Kofferdeckelverschlusses von Hand betätigbarer Stromschalter (14) mit an die Stromversorgungsquelle des Fahrzeugs anschließbaren Stromanschlüssen (15, 16) versehen ist, **dadurch gekennzeichnet, dass** die Stromanschlüsse (15, 16) des Stromschalters ( 14) mit jeweiligen fahnenförmigen Teilen (18, 19) einer (11) des genannten Metallbahnenpaares und mindestens einer weiteren an der Halterungsanordnung (4) befestigten Metallbahn (20) mit Hilfe von lösbaren Verbindungsmitteln (17) verbunden sind.

2. Halterungsanordnung (4) nach Anspruch 1, bei welcher der genannte von Hand betätigbare Stromschalter (14) durch mindestens eine lösbare, mit jeweiligen Kontakten (8, 21) versehene Anschlussvorrichtung (10) an die Stromversorgungsquelle des Fahrzeugs anschließbar ist, **dadurch gekennzeichnet, dass** die genannten Kontakte (8, 21) der lösbaren Anschlussvorrichtung (10) von jeweiligen Teilen einer des genannten Metallbahnenpaares (11, 20) gebildet sind.

## Revendications

1. Assemblage de corps de support (4) pour au moins une lampe (5) utilisée pour éclairer la plaque d'immatriculation d'un véhicule automobile, comprenant des bornes (6, 7) de contact électrique et de support pour cette lampe (5) qui sont aptes à être connectées à la source d'alimentation en courant du véhicule au moyen de conducteurs respectifs formés par une paire de pistes métalliques façonnées (11, 12) fixées au corps de support (4), au moins un interrupteur électrique à commande manuelle (14), fixé à son tour sur ledit corps de support (4) et apte à mettre sous tension un moteur électrique, ou moyen similaire, afin de déclencher ou dégager la serrure du coffre, étant pourvu avec des bornes électriques (15, 16) aptes à être connectées à la source d'alimentation en courant du véhicule, **caractérisé en ce que** les bornes (15, 16) de l'interrupteur électrique (14) sont reliées par des moyens de connexion séparables (17) à des portions respectives en forme de languette (18, 19) de l'une (11) de ladite paire de pistes métalliques et au moins une piste métallique ultérieure (20) fixée au corps de support (4).

2. Assemblage de corps de support (4) selon la revendication 1, dans lequel ledit interrupteur électrique à commande manuelle (14) est apte à être connecté à la source d'alimentation en courant du véhicule au moyen d'au moins un connecteur séparable (10) pourvu de contacts respectifs (8, 21), **caractérisé en ce que** lesdits contacts (8, 21) du connecteur séparable (10) sont constitués par des portions respectives d'une de ladite paire de pistes métalliques (11, 20).
